# EUROPÄISCHE PATENTANMELDUNG

(11) **EP 1 191 279 A2**
(43) Veröffentlichungstag der Anmeldung: **27.03.2002**
(21) Anmeldenummer: 01121697.5
(22) Anmeldetag: 17.09.2001
(51) Int. Cl.: F21S 8/12, F21V 9/04

(54) **Scheinwerfer für Fahrzeuge**

(30) Priorität: 23.09.2000 DE 10047207
(71) Anmelder: Hella KG Hueck & Co., 59552 Lippstadt (DE)
(72) Erfinder: Burg, Michael, 58557 Lippstadt (DE); Abel, Björn, 32107 Bad Salzuflen (DE); Stallein, Lambertus, 33129 Delbrück (DE); Eichhorn, Karsten, 59320 Ennigerloh (DE)

(57) **Zusammenfassung**

Die Erfindung betrifft einen Scheinwerfer (1) für Fahrzeuge mit einem Reflektor (2) und mit einer in einem Scheitelbereich des Reflektors (2) angeordneten Lichtquelle (3), die sichtbares Licht und zumindest Infrarotlicht emittiert, mit einem der Lichtquelle (3) zugeordneten Filter (8), das für Infrarotlicht durchlässig ist, mit einem Infrarotdetektor und mit einer im Bereich des Fahrzeugrandes angeordneten Informationseinheit, mittels derer eine Information über das Infrarotbild eines in einer vorgegebenen Betriebsstellung ausgeleuchteten Bereichs vermittelbar ist, wobei der Reflektor (2) topfförmig ausgebildet ist mit einem ersten und einem zweiten Brennpunkt, wobei die Lichtquelle (3) im Bereich des ersten Brennpunktes und eine Blende (4) zur Erzeugung einer Hell-Dunkel-Grenze im Bereich des zweiten Brennpunktes angeordnet sind, dass in Lichtaustrittsrichtung vor der Blende eine Sammellinse (5) angeordnet ist und dass die Blende (4) im Wesentlichen aus dem für das Infrarotlicht durchlässigen Filter (8) gebildet ist.

## Beschreibung

Die Erfindung betrifft einen Scheinwerfer für Fahrzeuge mit einem Reflektor und mit einer von dem Reflektor eingefassten Lichtquelle, die sichtbares Licht und zumindest Infrarotlicht emittiert, mit einem der Lichtquelle zugeordneten Filter, das für Infrarotlicht durchlässig und für sichtbares Licht undurchlässig ist, mit einem Infrarotdetektor und mit einer im Bereich des Fahrzeugraums angeordneten Informationseinheit, mittels derer eine Information über das Infrarotbild eines in einer vorgegebenen Betriebsstellung ausgeleuchteten Bereichs vermittelbar ist.

Aus der DE 39 32 216 A1 ist ein Scheinwerfer für Fahrzeuge bekannt, der einen Reflektor und eine im Scheitelbereich des Reflektors angeordnete Lichtquelle aufweist. Dieser Scheinwerfer ist als Fernlichtscheinwerfer ausgebildet und dient zur Erzeugung einer Fernlichtverteilung. Zur Erzeugung einer Abblendlichtverteilung ist ein weiterer Scheinwerfer vorgesehen. Damit in der Abblendlicht-Betriebsstellung der Sichtbereich des Fahzeugfahrers vergrößert werden kann, ist auf die Lichtquelle des Fernlichtscheinwerfers ein zylinderförmiger Filter aufgestülpt, der lediglich für Infrarotlicht durchlässig ist. Auf diese Weise kann der Fernlichtscheinwerfer in der Abblendlicht-Betriebsstellung zur Erzeugung einer Infrarotlichtverteilung genutzt werden, deren ausgeleuchteter Bereich der Fernlichtfunktion entspricht. Die Infrarotlichtverteilung kann mittels eines Infrarotdetektors erfasst und mittels einer im Fahrzeugraum angeordneten Anzeigeeinheit dargestellt werden. Hierdurch kann auch in der Abblendlicht-Betriebsstellung eine Ausleuchtung von entfernt liegenden Gegenständen gewährleistet sein. Nachteilig an dem bekannten Scheinwerfer ist jedoch, dass zur Erzeugung einer Abblendlicht- und Fernlichtverteilung zwei gesonderte Scheinwerfer erforderlich sind.

Es ist erwünscht, dass auch mittels eines Scheinwerfers, der nach dem Projektionsprinzip arbeitet, ein dem von Fernlicht ausgeleuchteten Bereich entsprechender Bereich in der Abblendlicht-Betriebsstellung mit Infrarotlicht ausgeleuchtet wird. Zwar ist aus der DE 41 24 374 A1 ein Scheinwerfer nach dem Projektionsprinzip bekannt, bei dem eine die Hell-Dunkel-Grenze abbildende Blende einen Filter aufweist. Bei diesem Filter handelt es sich jedoch um einen für das Ultraviolettlicht durchlässiges Filter. Hiebei macht man sich zunutze, dass die ultraviolette Strahlung an fluoreszierenden Gegenständen in sichtbares Licht umgewandelt wird. Nachteilig an diesem bekannten Scheinwerfer ist, dass die Darstellung eines erweiterten "ausgeleuchteten" Bereiches abhängig ist von der Ausbildung der zu erkennenden Gegenstände in diesem Bereich. Die Gegenstände müssen optisch anregbare Materialien aufweisen, so dass andernfalls diese Gegenstände bzw. Personen unerkannt bleiben.

Aufgabe der vorliegenden Erfindung ist es, einen Scheinwerfer für Fahrzeuge derart weiterzubilden, dass mit geringem Bauraumaufwand auch lediglich bei einer Abblendlicht-Betriebsstellung des Scheinwerfers frühzeitig entfernt angeordnete Gegenstände unabhängig von an den Gegenständen zu treffenden Maßnahmen mittels einer zusätzlichen Informationseinheit erkannt werden können.

Zur Lösung dieser Aufgabe ist die Erfindung dadurch gekennzeichnet, dass der Lichtquelle in Lichtausbreitungsrichtung eine Blende zur Erzeugung einer Hell-Dunkel-Grenze einerseits und einer Sammellinse andererseits nachgeordnet ist, wobei die Blende zumindest bereichsweise aus einem für das Infrarotlicht durchlässigen Material besteht, derart, dass die Blende in der Betriebsstellung eine die Lichtverteilung für sichtbares Licht erweiternde Lichtverteilung für Infrarotlicht erzeugt.

Der wesentliche Vorteil der Erfindung besteht darin, dass ein nach dem Projektionsprinzip arbeitender Scheinwerfer dazu genutzt werden kann, Infrarotlicht auszusenden, so dass mittels eines Infrarotdetektors und einer Informationseinheit in der Abblendlicht-Betriebsstellung des Scheinwerfers entfernt liegende, über den durch das Abblendlicht ausgeleuchteten Bereich hinausgehende Gegenstände erkannt werden können. Vorteilhaft hat die Blende eine Doppelfunktion. Zum einen dient eine Kante der Blende zur Abbildung der Hell-Dunkel-Grenze in der Abblendlicht-Betriebsstellung. Zum anderen ist die Blende für Infrarotlicht durchlässig, so dass in einem weitergehenden, über den Abblendlichtbereich hinausgehenden Bereich eine "Ausleuchtung" mit Infrarotlicht ermöglicht wird, die Fahrer von entgegenkommenden Fahrzeugen nicht blendet, obwohl ihre Strahlcharakteristik einer Fernlichtverteilung entspricht.

Nach einer besonderen Ausführungsform der Erfindung ist die Blende beweglich ausgestaltet, so dass in einer Fernlicht-Betriebsstellung eine Fernlichtverteilung mit sichtbarem Licht ermöglicht wird. Vorteilhaft ermöglicht diese Ausführung der Erfindung, dass stets eine Fernlichtverteilung erzeugt wird. In der eigentlichen Abblendlicht-Betriebsstellung des Scheinwerfers wird eine Fernlichtverteilung mit Infrarotlicht erzeugt. In der Fernlicht-Betriebsstellung des Scheinwerfers wird eine Fernlichtverteilung mit sichtbarem Licht und Infrarotlicht erzeugt. Auf diese Weise kann platzsparend in verschiedenen Betriebsstellungen stets eine weitreichende und umfassende "Ausleuchtung" der vor dem Fahrzeug liegenden Umgebung verwirklicht werden.

Nach einer Weiterbildung der Erfindung ist die Blende um eine zu der optischen Achse parallelen Drehachse schwenkbar gelagert, so dass durch Verschwenken der Blende nach unten auf einfache Weise eine Fernlicht-Betriebsstellung einstellbar ist.

Nach einer alternativen Ausführungsform ist die Blende als eine Drehwalze ausgebildet, mittels derer unterschiedliche Lichtverteilungen abhängig von der Kontur der Drehwalze erzeugbar sind.

Nach einer Weiterbildung der Erfindung ist die Kante der Blende mit einer Fase versehen. Auf diese Weise kann eine erwünschte Aufweichung der Hell-Dunkel-Grenze erzielt werden.

Nach einer Weiterbildung der Erfindung ist die Lichtquelle als eine Halogenlampe ausgebildet, die ein kontinuierliches Emissionsspektrum sowohl im sichtbaren als auch im infraroten Spektralbereich aufweist. Alternativ ist die Verwendung einer Gasentladungslampe vorgesehen, deren Emissionsspektrum deutliche Spektrallinien aufweist, von denen wenigstens eine im Bereich der nahen Infrarotstrahlung liegt. Hierdurch ist es möglich, vor dem Detektor ein Bandpassfilter anzubringen, welches nur diese Spektrallinie durchlässt, so dass störende Einflüsse von entgegenkommenden Fahrzeugen oder Umgebungslicht auf den Detektor vermindert werden.

Ausführungsbeispiele der Erfindung werden nachfolgend anhand der Zeichnungen näher erläutert.

Es zeigen:
- Figur 1: eine perspektivische Ansicht eines Scheinwerfers nach einer ersten Ausführungsform,
- Figur 2: ein schematischer Vertikalschnitt durch einen Scheinwerfer gemäß Figur 1,

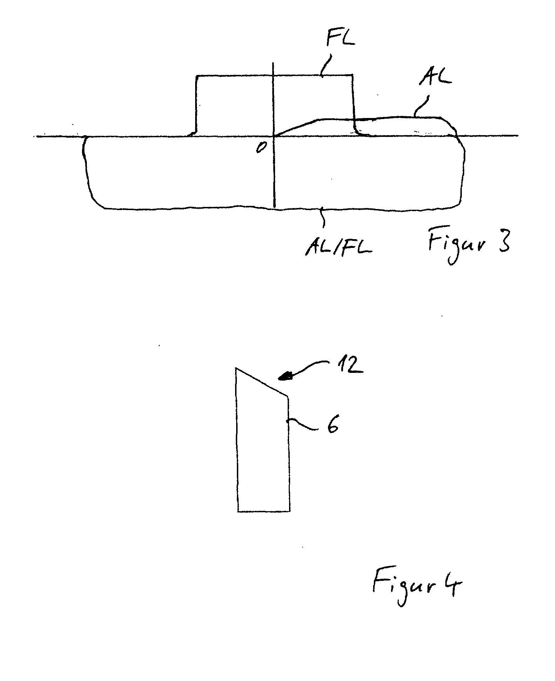

- Figur 3: eine Lichtintensitätsverteilung des Scheinwerfers nach Figur 1 in einer Abblendlicht- und einer Fernlicht-Betriebsstellung,
- Figur 4: ein vergrößerter Querschnitt einer Blende gemäß Figur 1,
- Figur 5: eine perspektivische Ansicht eines Scheinwerfers nach einer zweiten Ausführungsform und
- Figur 6: ein schematischer Vertikalschnitt durch einen Scheinwerfer gemäß Figur 5.

Ein nach dem Projektionsprinzip arbeitender Scheinwerfer 1 besteht im Wesentlichen aus einem Reflektor 2, einer Lichtquelle 3, einer Blende 4 und einer Sammellinse 5. Der Reflektor 2 ist topfförmig ausgebildet und weist eine zentrale Öffnung auf, die als Lampenfassungsloch für die Lichtquelle 3 dient.

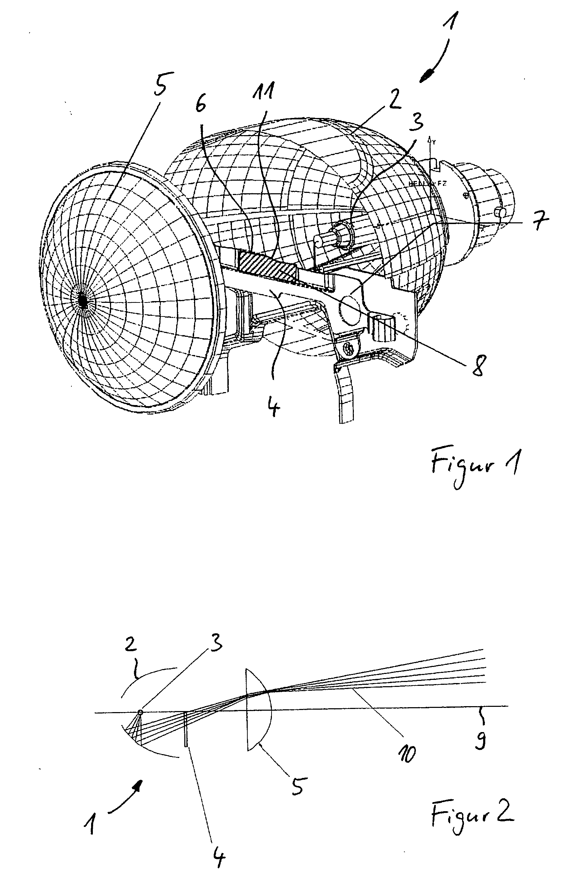

Die Lichtquelle 3 ist als eine Halogenlampe ausgebildet und ist im Zusammenwirken mit einer im Brennpunkt der Linse 5 angeordneten Blende 4 abgestimmt zu dem aus Freiflächen gebildeten Reflektor 2 angeordnet. Die Blende 4 weist eine Kante 6 auf, die eine Hell-Dunkel-Grenze der in Figur 1 dargestellten Abblendlicht-Betriebsstellung erzeugt. Die Linse 5 ist als plan-konvexe Linse ausgebildet, in deren Brennpunkt die Blende 4 angeordnet ist.

Die Blende 4 ist an einem mit einem nicht dargestellten Gehäuse des Scheinwerfers 1 fest verbundenen Tragelement 7 verschwenkbar verbunden. In der in Figur 1 abgebildeten Abblendlicht-Betriebsstellung der Blende 4 erstreckt sich diese im Wesentlichen horizontal quer zu einer optischen Achse 9 des Reflektors 2. In einer nicht dargestellten Fernlicht-Betriebsstellung ist die Blende 4 nach unten verschwenkt angeordnet, wobei sie zu einer Horizontalen einen spitzen Winkel einnimmt.

Ein in Figur 1 schraffiert ausgebildeter Bereich der Blende 4 ist als ein für das Infrarotlicht durchlässiges Filter 8 ausgebildet, das das von der Lichtquelle 3 ausgesandte sichtbare Licht absorbiert und lediglich Infrarotlicht durchlässt. Alternativ kann das Filter 8 die auf dasselbe treffende sichtbare Strahlung ganz oder teilweise reflektieren, so dass dieser Anteil nicht zur Beleuchtung nutzbar ist. Vorteilhaft kann hierdurch eine thermische Belastung des Filtermaterials-wie sie bei der Absorption des Lichtes auftritt - verringert werden.

Wie schematisch in Figur 2 gezeigt, werden an einer unterhalb einer optischen Achse 9 angeordneten Flächen des Reflektors 2 reflektierte infrarote Lichtstrahlen 10 ohne Richtungsänderung durch das Filter 8 durchgelassen, so dass sie mittels der Linse 5 entsprechend einer Fernlichtverteilung gebrochen werden. Die so emittierten Infrarot-Lichtstrahlen erzeugen eine Fernlichtverteilung FL im infraroten Spektralbereich, die zusätzlich zu der bereits vorliegenden Abblendlichtverteilung AL im sichtbaren Bereich desselben Scheinwerfers 1 vorliegt. Vorteilhaft kann hierdurch die Blende 4 ohne Umrahmung bzw. Einfassung ausgeführt sein.

Diese Infrarotlichtverteilung kann mittels eines am Fahrzeug befestigten Infrarot-Detektors aufgenommen und mittels einer im Bereich des Fahrzeugraums angeordneten Informationseinheit für den Fahrer erkennbar gemacht werden. Die Informationseinheit kann akustische oder optische Warnsignale abgeben. Alternativ kann die Informationseinheit als Anzeigeeinheit in Form eines Monitors ausgebildet sein.

Wie aus Figur 1 ersichtlich ist, erstreckt sich das für Infrarotlicht durchlässige Filter 8 durchgehend von der oberen Kante 6 der Blende 4 bis in einen von der optischen Achse 9 entfernt liegenden Bereich. Die Kante 6 weist eine 15°-Schräge 11 auf, so dass sich in der Abblendlicht-Betriebsstellung des Schein-

werfers 1 eine vorgegebene Abblendlichtverteilung AL im sichtbaren Lichtbereich ergibt. Da das Filter 8 für Infrarotlicht durchlässig ist, ergibt sich gleichzeitig eine Fernlichtverteilung FL im Infrarotbereich, die im Wesentlichen den Bereich des Fernlichtes im sichtbaren Bereich umfasst.

Zur Fernlicht-Betriebsstellung des Scheinwerfers 1 wird die Blende 4 nach unten verschwenkt, so dass nunmehr die Fernlichtverteilung im sichtbaren Bereich im Wesentlichen in der Kontur der Fernlichtverteilung FL im Infrarotbereich entspricht.

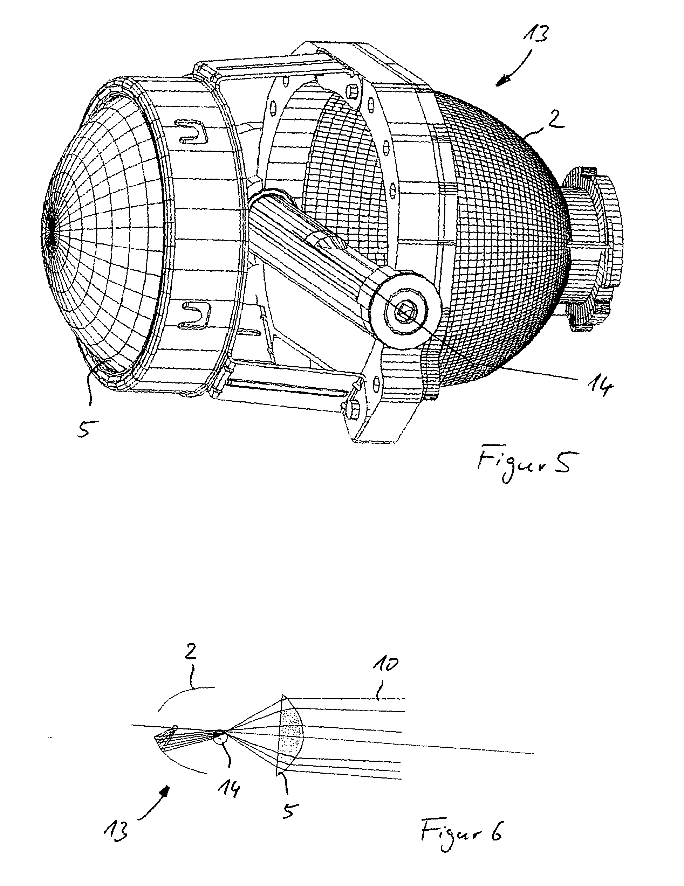

Zur Aufweichung der Hell-Dunkel-Grenze in der Abblendlicht-Betriebsstellung des Scheinwerfers 1 ist die Kante 6 im Querschnitt schräg nach Art einer Fase 12 ausgebildet, siehe Figur 4.

Nach einer alternativen Ausführungsform gemäß Figur 5 und 6 ist ein zu dem ersten Ausführungsbeispiel gleichartiger Scheinwerfer 13 vorgesehen, der im Unterschied zu dem vorhergehenden Beispiel eine als Drehwalze 14 ausgebildete Blende aufweist. Diese Drehwalze 14 ist aus einem infrarotdurchlässigen Material hergestellt und ermöglicht, wie die plattenförmige Blende 4, stets eine Fernlichtverteilung im Infrarotbereich. Dadurch, dass die Blende als Drehlwalze 14 ausgebildet ist, können mehrere verschiedene Lichtverteilungen im sichtbaren Bereich erzeugt werden.

Das Filter 8 bzw. die Blenden 4, 14 sind aus einem für Infrarotlicht durchlässigen, aber für sichtbares Licht undurchlässigen Glasmaterial hergestellt. Das Glasmaterial ist derart gewählt, dass es für sichtbares Licht (380 - 780 nm) nahezu vollständig undurchlässig ist. Für Strahlung im nahen Infrarotbereich, also mit einer Wellenlänge zwischen 780 nm und ca. 1100 nm, ist das Filter nahezu vollständig durchlässig. In Verbindung mit der als Halogenlampe ausgeführten

Lichtquelle 3 kann hierdurch ein kontinuierlicher Verlauf im infraroten Spektralbereich gewährleistet sein.

Alternativ kann die Lichtquelle 3 auch als Gasentladungslampe ausgebildet sein, die bei etwa 830 nm eine Spektrallinie aufweist.

Der erfindungsgemäße Scheinwerfer 1, 13 hat einen kompakten Aufbau und ermöglicht stets eine Fernlichtverteilung im Infrarotlichtbereich.

## Patentansprüche

1. Scheinwerfer für Fahrzeuge mit einem Reflektor und mit einer von dem Reflektor eingefassten Lichtquelle, die sichtbares Licht und zumindest Infrarotlicht emittiert, mit einem der Lichtquelle zugeordneten Filter, das für Infrarotlicht durchlässig und für sichtbares Licht undurchlässig ist, mit einem Infrarotdetektor und mit einer im Bereich des Fahrzeugraums angeordneten Informationseinheit, mittels derer eine Information über das Infrarotbild eines in einer vorgegebenen Betriebsstellung ausgeleuchteten Bereichs vermittelbar ist, **dadurch gekennzeichnet, dass** der Lichtquelle (3) in Lichtausbreitungsrichtung eine Blende (4) zur Erzeugung einer Hell-Dunkel-Grenze einerseits und einer Sammellinse (5) andererseits nachgeordnet ist, wobei die Blende (4) zumindest bereichsweise aus einem für das Infrarotlicht durchlässigen Material besteht, derart, dass die Blende (4) in der Betriebsstellung eine die Lichtverteilung für sichtbares Licht erweiternde Lichtverteilung für Infrarotlicht erzeugt.

2. Scheinwerfer nach Anspruch 1, **dadurch gekennzeichnet, dass** ein sich von einer die Hell-Dunkel-Grenze bildender Kante (6) erstreckender durchgängiger Bereich der Blende (4) als ein für das Infrarotlicht durchlässiges Filter (8) ausgebildet ist.

3. Scheinwerfer nach Anspruch 1 oder 2, **dadurch gekennzeichnet, dass** die Blende (4) beweglich ausgebildet ist, derart, dass in einer Fernlicht-Betriebsstellung der Blende (4) eine Fernlichtverteilung für sichtbares Licht einerseits und in einer Abblendlicht-Betriebsstellung der Blende (4) eine Abblendlichtverteilung (AL) für sichtbares Licht sowie eine Fernlichtverteilung (FL) für Infrarotlicht andererseits erzeugbar sind.

4. Scheinwerfer nach einem der Ansprüche 1 bis 3, **dadurch gekennzeichnet, dass** die Blende (4) um eine zu der optischen Achse (9) parallelen Drehachse schwenkbar ausgebildet ist.

5. Scheinwerfer nach einem der Ansprüche 1 bis 3, **dadurch gekennzeichnet, dass** die Blende (4) als eine Drehwalze (14) ausgebildet ist.

6. Scheinwerfer nach einem der Ansprüche 1 bis 5, **dadurch gekennzeichnet, dass** die Kante (6) der Blende (4) eine Fase (12) aufweist.

7. Scheinwerfer nach einem der Ansprüche 1 bis 6, **dadurch gekennzeichnet, dass** das Filter (8) aus einem ausschließlich Infrarotlicht durchlässigen Glasmaterial besteht.

8. Scheinwerfer nach einem der Ansprüche 1 bis 7, **dadurch gekennzeichnet, dass** das Filter (8) durchlässig ist für Infrarotlicht in einem Bereich der Wellenlänge von mindestens 780 nm.

9. Scheinwerfer nach einem der Ansprüche 1 bis 8, **dadurch gekennzeichnet, dass** die Lichtquelle (3) als eine Halogenlampe oder als eine Gasentladungslampe ausgebildet ist.
